# EUROPEAN PATENT APPLICATION

(11) **EP 4 424 451 A1**
(43) Date of publication of application: **04.09.2024**
(21) Application number: 22889715.3
(22) Date of filing: 04.10.2022
(51) Int. Cl.: B23K 20/12

(54) **METHOD FOR MANUFACTURING JOINED BODY**

(30) Priority: 05.11.2021 JP 2021180854
(71) Applicant: Nippon Light Metal Company, Ltd., Tokyo 105-0004 (JP)
(72) Inventor: SEO, Nobushiro, Shizuoka-shi, Shizuoka 421-3291 (JP); KOIZUMI, Shingo, Shizuoka-shi, Shizuoka 421-3291 (JP)
(74) Representative: Kiwit, Benedikt
(86) International application number: PCT/JP2022/037101
(87) International publication number: WO 2023/079891

(57) **Abstract**

A method for manufacturing a joined body in which a jacket body (first metal member) (2) and a seal body (second metal member) (3) are friction stir welded together, wherein: at a main joining step, there is a separation zone in which an end position (EP1) is set on the jacket body (2) as more outward than a set movement route (L1) and a first abutted section (J1) is friction stir welded, after which a rotating tool (F) is moved to the end position (EP1) and the rotating tool (F) is separated from the jacket body (2) at the end position (EP1); at the main joining step, a stir pin (F2) is rotated at a prescribed rotation speed to friction stir weld the first abutted section (J1); and in the separation zone, the rotating tool (F) is moved toward the end position (EP1) while gradually lowering the rotation speed thereof from the prescribed rotation speed and the rotating tool (F) is separated from the jacket body (2).

## Description

### TECHNICAL FIELD

The present invention relates to a method for manufacturing a joined body.

### BACKGROUND ART

Friction stir welding has been used to manufacture joined bodies. Patent Literatures 1-3 disclose methods for manufacturing a joined body (liquid-cooling jacket) by friction stir welding. In Patent Literatures 1-3, the jacket body is made of an aluminum alloy casting material such as ADC12, and the sealing body is made of an aluminum alloy expansible material such as A1050, so that the jacket body has a higher hardness than the sealing body.

In Patent Literatures 1-3, the sealing body is placed on the jacket body, and friction stir welding is performed to the butted portion between the jacket body and the sealing body. After welding the butted portion, in a leaving section, the stirring pin of the rotary tool F is moved toward an ending position that is set on the sealing body while gradually increasing the rotational speed, and the rotary tool is made to leave (removed from) the sealing body.

### CITATION LIST

### Patent Literature

Patent Literature 1: JP 2020-011271 A
Patent Literature 2: JP 2020-131263 A
Patent Literature 3: JP 2020-175396 A

### SUMMARY OF INVENTION

### Technical Problem

From the viewpoint of increasing design flexibility or reducing manufacturing cost, there is a requirement to remove the rotary tool from the jacket body. For example, if electronic components are to be installed on the sealing body after joining, a removal hole left after removing the rotary tool must be repaired before installing the electronic components, as the removal hole would otherwise interfere with the installation process. Therefore, pre-processing is necessary to repair the removal hole. In order to perform friction stir welding and install electronic components without requiring the pre-processing, it is necessary to remove the rotary tool from the jacket body. Alternatively, the sealing body with a printed circuit board installed thereon may be placed on the jacket body and joined. In this case, too, the rotary tool must be removed from the jacket body to avoid contact between the printed circuit board and the rotary tool.

However, when making the rotary tool leave the jacket body with higher hardness, excessive frictional heat may be input to the jacket body if the rotary tool is made to leave the jacket body while increasing the rotational speed, as described in Patent Literatures 1-3. In this case, cracks may occur in the jacket body or a large amount of burrs and wall thinning may be generated, so that the surface finish of the jacket body may deteriorate. Further, the high hardness of the jacket body causes increased wear on the rotary tool, leading to damage to the tool.

In view of the above, the present invention seeks to provide a method for manufacturing a joined body that can achieve a good surface finish of the joined body and prevent damage to the rotating tool.

### Solution to Problem

In order to solve the problem, the present invention provides a method for manufacturing a joined body, in which a first metal member and a second metal member are joined together by friction stirring, wherein the first metal member is made of a first aluminum alloy, and the second metal member is made of a second aluminum alloy, the first aluminum alloy having a higher hardness than the second aluminum alloy, and wherein a rotary tool used in the friction stirring has a stirring pin, the method comprising the steps of: a butting process to form a butted portion by butting a side face of the first metal member and a side face of the second metal member, and a primary joining process to perform friction stirring to the butted portion by moving the stirring pin of the rotary tool at a predetermined depth along a set moving track that is set on an inner side relative to the side face of the second metal member in a state that the stirring pin of the rotary tool being rotated is inserted into the second metal member and that an outer circumferential face of the stirring pin is slightly in contact with the first metal member, wherein in the primary joining process, an ending position is set on the first metal member at an outer side relative to the set moving track, and a leaving section is provided, in which after friction stir welding is performed to the butted portion, the rotary tool is moved toward the ending position and is made to leave the first metal member at the ending position, wherein in the primary joining process, the friction stirring is performed to the butted portion while the stirring pin is rotated at a predetermined rotational speed, and wherein the rotary tool is made to leave the first metal member in the leaving section when the rotary tool is moved to the ending position while gradually decreasing a rotational speed of the stirring pin from the predetermined rotational speed.

It is preferable that in the primary joining process, if the rotational speed for performing friction stir welding at the butted portion is assumed to be 100%, a final rotational speed in the leaving section is set to 10% or higher and 50% or lower.

It is preferable that in the primary joining process, the rotational speed for performing friction stir welding at the butted portion is 5,000 rpm or higher and 20,000 rpm and lower, and that a final rotational speed in the leaving section is 1,000 rpm or higher and 8,000 rpm or lower.

It is preferable that the method for manufacturing a joined body further includes a preparation process to form the first metal member by die-casting.

It is preferable that in the primary joining process, a starting position is set on the set moving track, and an insertion section is provided, in which before friction stir welding is performed to the butted portion, the stirring pin is inserted into the starting position and the rotary tool is lowered while being moved from the starting position, and that in the primary joining process, friction stir welding is performed by moving the rotary tool such that before the rotary tool is made to leave the first metal member at the ending position, the stirring pin passes through the starting position.

It is preferable that in the primary joining process, a starting position is set on the set moving track, and an insertion section is provided, in which before friction stir welding is performed to the butted portion, the stirring pin is inserted into the starting position and the rotary tool is lowered while being moved from the starting position, and that in the insertion section, the rotary tool is moved toward a middle point that is set on the set moving track and lowered, while gradually decreasing the rotational speed from a rotational speed higher than the predetermined rotational speed.

It is preferable that in the primary joining process, a starting position is set on the second metal member at an inner side relative to the set moving track, and an insertion section is provided, in which before friction stir welding is performed to the butted portion, the stirring pin is inserted into the starting position and the rotary tool is lowered while being moved from the starting position, and that in the insertion section, the rotary tool is moved and lowered, while gradually decreasing the rotational speed from a rotational speed higher than the predetermined rotational speed.

It is preferable that in the primary joining process, a starting position is set on the first metal member at an outer side relative to the set moving track, and an insertion section is provided, in which before friction stir welding is performed to the butted portion, the stirring pin is inserted into the starting position and the rotary tool is lowered while being moved from the starting position, and that in the insertion section, the rotary tool is moved and lowered, while gradually increasing the rotational speed from a rotational speed lower than the predetermined rotational speed.

### Advantageous Effects of Invention

According to the method for manufacturing a joined body according to the present invention, a good surface finish of the joined body can be provided and damage to the rotary tool can be prevented.

### BRIEF DESCRIPTION OF DRAWINGS

FIG. 1 is an exploded perspective view showing a joined body according to an embodiment of the present invention.
FIG. 2 is a cross sectional view showing a butting process of a method for manufacturing the joined body according to this embodiment.
FIG. 3 is a plan view showing a first region and a second region of the joined body according to this embodiment.
FIG. 4 is a plan view showing a set moving track of the joined body according to this embodiment.
FIG. 5 is a plan view showing a starting position in a first primary joining process of the method for manufacturing the joined body according to this embodiment.
FIG. 6 is a schematic view showing an insertion depth of a rotary tool at the starting position in the first primary joining process of the method for manufacturing the joined body according to this embodiment.
FIG. 7 is a cross sectional view showing the first primary joining process of the method for manufacturing the joined body according to this embodiment.
FIG. 8 is a plan view showing an ending position in the first primary joining process of the method for manufacturing the joined body according to this embodiment.
FIG. 9 is a schematic view showing an insertion depth of the rotary tool at the ending position in the first primary joining process of the method for manufacturing the joined body according to this embodiment.
FIG. 10 is a plan view showing a second primary joining process of the method for manufacturing the joined body according to this embodiment.
FIG. 11 is a plan view showing an ending position in the second primary joining process of the method for manufacturing the joined body according to this embodiment.
FIG. 12 is a plan view showing the first primary joining process of the method for manufacturing the joined body according to a first modification.
FIG. 13 is a plan view showing the second primary joining process of the method for manufacturing the joined body according to the first modification.
FIG. 14 is a plan view showing the first primary joining process of the method for manufacturing the joined body according to a second modification.
FIG. 15 is a plan view showing the second primary joining process of the method for manufacturing the joined body according to the second modification.
FIG. 16 is a plan view showing the method for manufacturing the joined body according to a third modification.
FIG. 17 is a plan view showing the method for manufacturing the joined body according to a fourth modification.

### DESCRIPTION OF EMBODIMENTS

An embodiment of the present invention will be described with reference made to the drawings where appropriate. The present invention is not limited to only the following embodiment. Moreover, components in the embodiment and modifications thereof can be appropriately combined in part or in whole.

### [1. Embodiment]

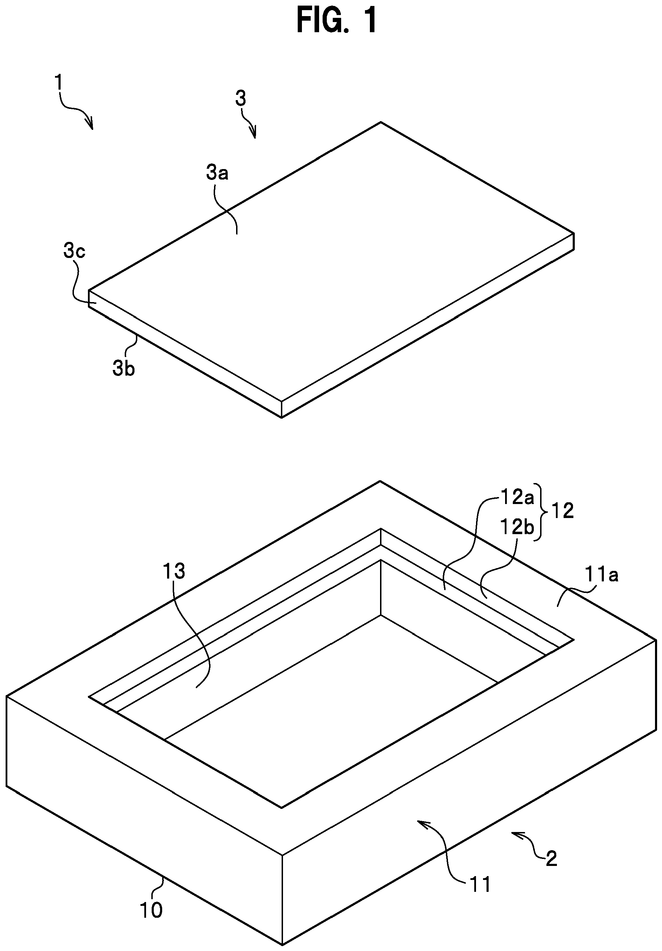

As shown in FIG. 1, a joined body (liquid-cooling jacket) 1 according to this embodiment is composed of a jacket body (first metal member) 2 and a sealing body (second metal member) 3. The joined body 1 is a device to cool a heating element placed thereon by flowing a fluid through the joined body 1. The jacket body 2 and the sealing body 3 are integrated together by friction stir welding. Note that, hereinafter, a "front face" means the face opposite to a "back face".

The jacket body (first metal member) 2 is mainly composed of a bottom portion 10 and a peripheral wall portion 11. The material of the jacket body 2 is not particularly limited so long as it is a metal capable of being frictionally stirred, and in this embodiment, the jacket body 2 is made of mainly a first aluminum alloy. The first aluminum alloy is, for example, an aluminum alloy casting material such as JISH5302 ADC12 (based on Al-Si-Cu).

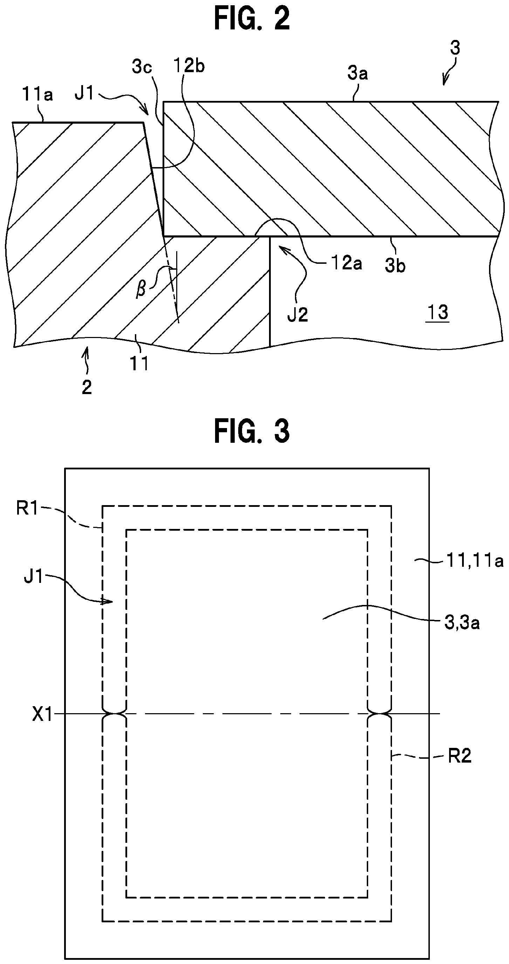

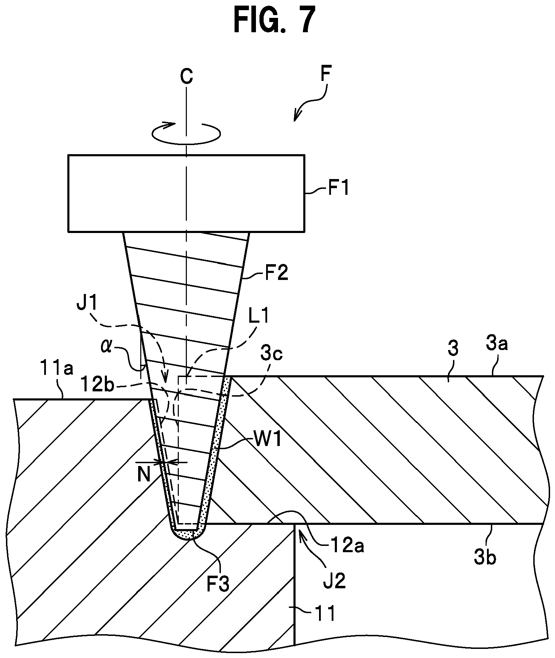

The bottom portion 10 is a plate-like member having a rectangular shape. The peripheral wall portion 11 is a wall portion standing on the peripheral edge portion of the bottom portion 10 and having a rectangular frame shape. A recessed portion 13 is defined by the bottom portion 10 and the peripheral wall portion 11. A peripheral wall step portion 12 is formed at an inner peripheral edge of the peripheral wall portion 11. The peripheral wall step portion 12 is composed of a step bottom face 12a and a step side face (side face) 12b obliquely standing up from the step bottom face 12a. As shown in FIG. 2, an inclination angle β of the step side face 12b may be appropriately set, and in this embodiment, the inclination angle β is the same as or approximately the same as an inclination angle α of a stirring pin F2 of a rotary tool F shown in FIG. 7.

Note that, the step side face 12b may stand up orthogonally to the step bottom face 12a. Furthermore, the jacket body 2 of this embodiment is integrally formed, but may be integrated by joining plural elements making up the peripheral wall portion 11 with a sealing agent or the like.

The sealing body (second metal member) 3 is a plate-like member to seal an opening portion of the jacket body 2. The sealing body 3 is not particularly limited so long as it is made of a metal capable of being frictionally stirred. In this embodiment, it is made of mainly a second aluminum alloy. The second aluminum alloy has a lower hardness than the first aluminum alloy. The second aluminum alloy is, for example, an aluminum alloy expansible material such as JIS A1050, A1070, A1100, A6063.

Next, a method for manufacturing the joined body according to this embodiment will be described. In the method for manufacturing the joined body according to this embodiment, a preparation process, a butting process and a primary joining process are performed.

The preparation process is a process to prepare the jacket body 2 and the sealing body 3. A method for manufacturing the jacket body 2 and the sealing body 3 is not particularly limited. For example, the jacket body 2 is formed by die-casting, and the sealing body 3 is formed by extrusion.

The butting process is a process to place the sealing body 3 on the jacket body 2 and to but side faces of the sealing body 3 and the jacket body 2 against each other as shown in FIG. 2. The side face 3c of the sealing body 3 is butted against the step side face (side face) 12b of the peripheral wall step portion 12 by the butting process to form a first butted portion J1. Since the step side face 12b is inclined toward the outside, a V-shaped cross sectional gap is formed at the first butted portion J1. The first butted portion J1 has a rectangular shape along the periphery of the sealing body 3 in a plan view. Furthermore, a back face 3b of the sealing body 3 is butted against the step bottom face 12a of the peripheral wall step portion 12 to form a second butted portion J2. The thickness of the sealing body 3 may be appropriately set, and in this embodiment, it is larger than the height dimension of the step side face 12b.

As shown in FIG. 3, in the first butted portion J1, one side region (in FIG. 3, upper side region) with respect to a middle line X1 set on the sealing body 3 is referred as a first region R1. The other side region (in FIG. 3, lower side region) with respect to the middle line X1 is referred to as a second region R2. The middle line X1 is a line passing through the middle position of the sealing body 3 in a longitudinal direction.

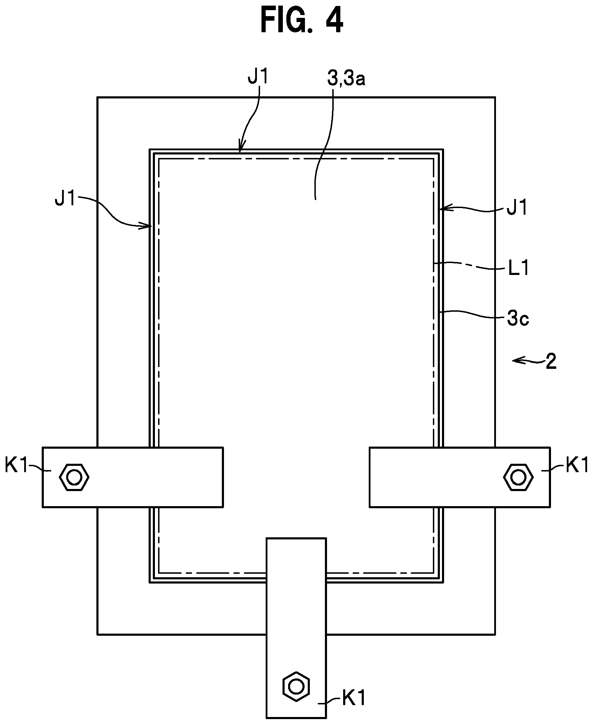

As shown in FIG. 4, after the sealing body 3 is placed on the jacket body 2, the jacket body 2 and the sealing body 3 with respect to the second region R2 (see FIG. 3) are clamped with three clamps K1 so as not to move. Furthermore, a "set moving track L1" (dash-dotted line) is set on an inner side relative to the first butted portion J1. The set moving track L1 is a moving track of the rotary tool F necessary for joining the first butted portion J1 in a primary joining process to be described later. Since the stirring pin F2 of the rotary tool F is slightly brought in contact with the step side face 12b in this embodiment as described later, the set moving track L1 is set to be a rectangular shape in a plan view on the inner side relative to the side face 3c.

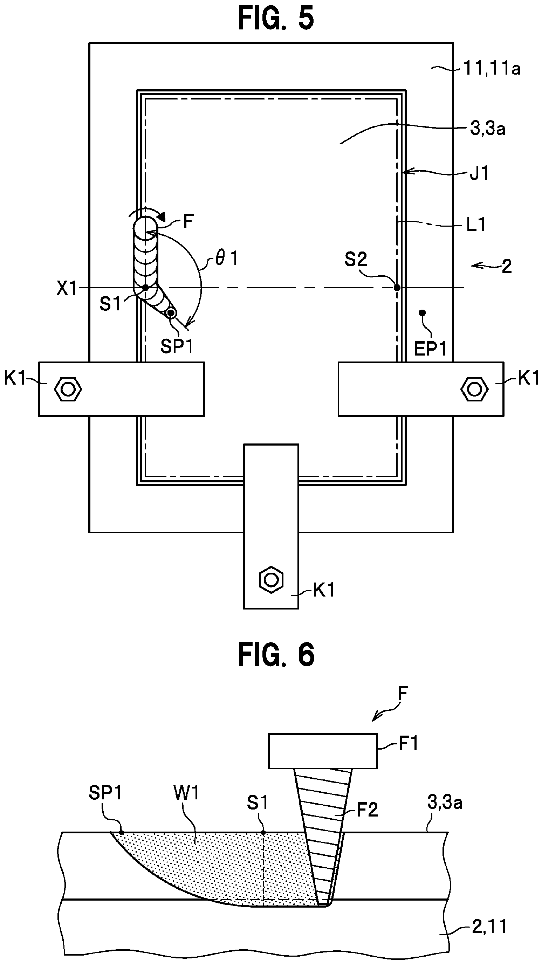

As shown in FIGS. 5 and 6, the primary joining process is a process to perform friction stir welding to the first butted portion J1 using the rotary tool F. In this embodiment, the first primary joining process in which the first region R1 (see FIG. 3) of the first butted portion J1 is joined, and the second primary joining process in which the second region R2 (see FIG. 3) of the first butted portion J1 is joined are respectively performed.

As shown in FIG. 7, the rotary tool F is composed of a connecting portion F1 and the stirring pin F2. The rotary tool F is made of, for example, tool steel. The connecting portion F1 is a portion to be connected to a rotary shaft of a friction stir device (not shown). The connecting portion F1 has a circular columnar shape, and has a thread hole (not shown) into which a bolt is fastened.

The stirring pin F2 hangs down from and is coaxial with the connecting portion F1. The stirring pin F2 has a smaller diameter with increasing distance from the connecting portion F1. The stirring pin F2 has a flat face F3 at the tip thereof.

The stirring pin F2 has a spiral groove formed on the outer circumferential face thereof. In this embodiment, because the rotary tool F is rotated clockwise, the spiral groove is formed to rotate counterclockwise with increasing distance from the base end toward the tip. In other words, the spiral groove is formed to rotate counterclockwise with increasing distance from the base end toward the tip when it is viewed from the upper side.

Note that, in a case where the rotary tool F is rotated counterclockwise, it is preferable that the spiral groove is formed to rotate clockwise with increasing distance from the base end toward the tip. In other words, the spiral groove of this case is formed to rotate clockwise with increasing distance from the base end toward the tip when it is viewed from the upper side. By forming the spiral groove in such a manner, plastically fluidized metal formed by friction stirring is led toward the tip of the stirring pin F2 through the spiral groove. This makes it possible to reduce the amount of metal to leak out of the metal members to be joined (the jacket body 2 and the sealing body 3).

As shown in FIG. 5, in the first primary joining process, three sections - comprising an insertion section, an original section and a leaving section - are frictionally stirred continuously. The insertion section extends from a starting position SP1 to a middle point S1. The original section extends from the middle point S1 to the other middle point S2, both located on the set moving track L1. The leaving section extends from the other middle point S2 to an ending position EP1. The middle points S1 and S2 are set at positions at which the middle line X1 and the set moving track L1 intersect. The starting position SP1 is set on an inner side relative to the set moving track L1 on a front face 3a of the sealing body 3. In this embodiment, the starting position SP1 is set at a position where an angle Θ1 defined by a line segment connecting the starting position SP1 and the middle point S1 and the set moving track L1 is an obtuse angle. The angle Θ1 is not particularly limited so long as it is an obtuse angle. However, it is preferable that the angle Θ1 is 120° or greater, more preferably 150° or greater, and even more preferably 170° or greater, and less than 180°, and more preferably 175° or less. If the angle θ1 is equal to or greater than the above-described lower limit value, an insertion hole provided at the starting position SP1 on the front face of the sealing body 3 is formed closer to the outer periphery of the sealing body 3. This can prevent a removal hole from interfering with an electronic component to be installed on the front face of the sealing body 3 at a position closer to the center of the sealing body 3. If the angle θ1 is less than the above-described upper limit value, the stirring pin F2 is less likely to contact the jacket body 2 when inserting the stirring pin F2.

As shown in FIG. 5, in the insertion section in the first primary joining process, friction stirring is performed from the starting position SP1 to the middle point S1. In the insertion section, the stirring pin F2 being rotated clockwise is inserted into the starting position SP1, and moved to the middle point S1. In this case, as shown in FIG. 6, the stirring pin F2 is gradually inserted such that it reaches a "predetermined depth" set in advance at least by the time it reaches the middle point S1. That is, the rotary tool F is gradually lowered while it is being moved to the set moving track L1 without remaining in one position.

In the insertion section in the first primary joining process, the rotational speed of the rotary tool F for friction stir welding may be set as desired. For example, in the insertion section, while moving the rotary tool F to the middle point S1, the rotational speed of the rotary tool F may be gradually lowered from a rotational speed higher than that of the rotary tool F in the original section. In this case, it is preferable to adjust the rotational speed of the rotary tool F toward the rotational speed used in the original section such that it matches the rotational speed in the original section when the stirring pin F2 reaches the middle point S1. This allows the rotation speed to compensate for small pressing force in the insertion section, so that frictional stirring can be performed desirably.

After the stirring pin F2 reaches the middle point S1, the stirring pin F2 continuously shifts to the original section for friction stir welding. As shown in FIGS. 5 and 7, in the original section, the rotary tool F is moved such that the axis C of the stirring pin F2 is overlapped with the set moving track L1. According to this embodiment, as shown in FIG. 7, the peripheral wall portion 11 of the jacket body 2 and the front face 3a of the sealing body 3 are separated from the connecting portion F1 of the rotary tool F, and only the stirring pin F2 is inserted into the jacket body 2 and the sealing body 3. Furthermore, in the original section, the "predetermined depth" for the stirring pin F2 is set to such an extent that the flat face F3 of the stirring pin F2 is slightly in contact with the step bottom face 12a. Note that, the "predetermined depth" for the stirring pin F2 may be appropriately set. For example, the "predetermined depth" for the stirring pin F2 may be set to a depth not to reach the step bottom face 12a. Here, a contact dimension of the flat face F3 of the stirring pin F2 against the step bottom face 12a is referred to as an insertion amount D (not shown in the drawings). If the flat face F3 of the stirring pin F2 contacts the step bottom face 12a as in the case of this embodiment, the insertion amount D is set in a range 0 < D ≤ 1.0 mm, preferably set in a range 0 < D ≤ 0.85 mm, further preferably set in a range 0 < D ≤ 0.65 mm.

In the original section in the first primary joining process, as shown in FIG. 7, the set moving track L1 is set such that an outer circumferential face of the stirring pin F2 is slightly in contact with the step side face 12b. Here, a contact dimension of the outer circumferential face of the stirring pin F2 against the step side face 12b is referred to as an offset amount N. If the flat face F3 of the stirring pin F2 is inserted deeper than the step bottom face 12a of the peripheral wall step portion 12 and the outer circumferential face of the stirring pin F2 is brought in contact with the step side face 12b as in the case of this embodiment, the offset amount N is set in a range 0 < N ≤ 1.0 mm, preferably set in a range 0 < N ≤ 0.85 mm, further preferably set in a range 0 < N ≤ 0.65 mm.

In a case where the offset amount N is set such that the outer circumferential face of the stirring pin F2 is not brought in contact with the step side face 12b, the joining strength of the first butted portion J1 is lowered. Further, in a case where the offset amount N defined by the outer circumferential face of the stirring pin F2 and the step side face 12b is larger than 1.0 mm, a large amount of the first aluminum alloy of the jacket body 2 is mixed into the sealing body 3 side, so that there is a risk of a poor joining. Furthermore, in the original section, the rotational speed of the rotary tool F for performing friction stir welding at the first butted portion J1 can be set as desired. For example, it can be set to 3,000 rpm or higher, and 25,000 rpm or lower. The rotational speed of the rotary tool F for performing friction stir welding at the first butted portion J1 is preferably 5,000 rpm or higher, more preferably 7,000 rpm or higher, and even more preferably 9,000 rpm or higher, and also preferably 20,000 rpm or lower, more preferably 17,000 rpm or lower, and even more preferably 15,000 rpm or lower. The rotational speed of the rotary tool F can be set, for example, according to the materials of the first and second aluminum alloys, the thickness of the sealing body 3, the insertion depth of the stirring pin F2, and the like.

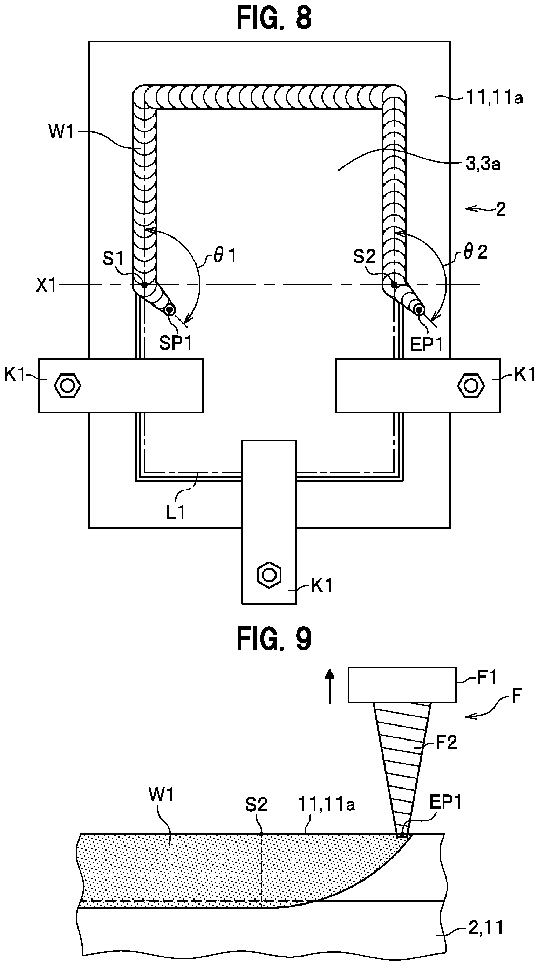

As shown in FIG. 8, after the stirring pin F2 reaches the other middle point S2, the stirring pin F2 continuously shifts to the leaving section. In the leaving section, as shown in FIG. 9, the stirring pin F2 is gradually moved upward while being moved from the other middle point S2 toward the ending position EP1, at which position the stirring pin F2 is made to leave the sealing body 3. That is, the rotary tool F is gradually moved upward while being moved toward the ending position EP1 without stopping at one position. At this time, the rotary tool F is moved to the ending position EP1, while its rotational speed in the leaving section is gradually reduced from the rotational speed of the rotary tool F in the original section. For example, if the rotational speed of the rotary tool F for performing friction stir welding at the first butted portion J1 in the original section is assumed to be 100%, the rotational speed in the leaving section can be set to 10% or higher and 50% or lower. It should be noted that the rotational speed in the leaving section refers to the final rotational speed of the stirring pin F2, which is reached as the rotary tool F is moved and its rotational speed is gradually decreased in the leaving section. To be more specific, it refers to the rotational speed to be reached when the stirring pin F2 is made to leave. The rotational speed in the leaving section relative to the rotational speed of the rotary tool F for performing friction stir welding at the first butted portion J1 is preferably 15% or higher, more preferably 20% or higher, and even more preferably 25% or higher, and also preferably 45% or lower, more preferably 40% or lower, and even more preferably 35% or lower. In the leaving section, the rotational speed of the rotary tool F can be set as desired. For example, it can be set to 1,000 rpm or higher, and 8,000 rpm or lower. The rotational speed of the rotary tool F in the leaving section is preferably 2,000 rpm or higher, more preferably 3,000 rpm or higher, and further more preferably 4,000 rpm or higher, and also preferably 7,000 rpm or lower, more preferably 6,000 rpm or lower, and further more preferably 5,000 rpm or lower. Setting the rotational speed of the rotary tool F in the leaving section to the above-described lower limit value or higher makes it possible to avoid insufficient frictional heating (heating by friction). This can suppress occurrence of defects caused by insufficient frictional heating. Further, setting the rotational speed of the rotary tool F in the leaving section to the above-described upper limit value or lower makes it possible to avoid excessive frictional heating (heating by friction). This can prevent occurrence of cracking caused by excessive frictional heating as well as suppressing generation of burrs and reduced wall thickness, resulting in a good surface finish. Further, wear and damage to the rotary tool F can be easily prevented.

Further, the ending position EP1 is set on a peripheral wall end face 11a of a peripheral wall section 11 outside the set moving track L1. The ending position EP1 is set at a position where an angle θ2 defined by a line segment connecting the ending position EP1 and the other middle point S2 and the set moving track L1 in the peripheral wall end face 11a of the peripheral wall section 11 is an obtuse angle. A plasticized region W1 is formed along the moving track of the rotary tool F.

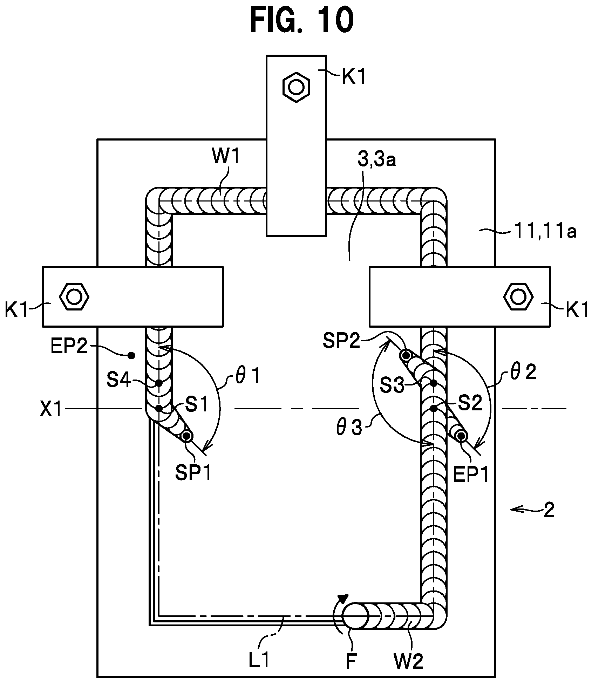

After the first primary joining process is performed, the clamps K1 are temporarily released, and as shown in FIG. 10, the jacket body 2 and the sealing body 3 in the first region R1 (see FIG. 3) are immovably clamped with the three clamps K1.

The second primary joining process is a process to perform friction stir welding to the first butted portion J1 in the second region R2 (see FIG. 3). As shown in FIG. 10, in the second primary joining process, three sections - comprising an insertion section, an original section and a leaving section - are frictionally stirred continuously. The insertion section extends from a starting position SP2 to a middle point S3. The original section extends from the middle point S3 to the other middle point S4, both located on the set moving track L1. The leaving section extends from the other middle point S4 to an ending position EP2. The starting position SP2 is set on an inner side relative to the set moving track L1 on the front face 3a of the sealing body 3. The middle point S3 is set on the first region R1 side (see FIG. 3) than the other middle point S2 on the set moving track L1. In this embodiment, the middle point S3 is set at a position where an angle θ3 defined by a line segment connecting the starting position SP2 and the middle point S3 and the set moving track L1 is an obtuse angle.

As shown in FIG. 10, in the insertion section in the second primary joining process, friction stirring is performed from the starting position SP2 to the other middle point S2. In the insertion section, the stirring pin F2 being rotated clockwise is inserted into the starting position SP2, and moved to the other middle point S3. In this case, the stirring pin F2 is gradually inserted to reach the "predetermined depth" that is set in advance, at least by the time it reaches the other middle point S2.

After the stirring pin F2 reaches the middle point S3, the stirring pin F2 continuously shifts to the original section for friction stir welding. In the original section, the rotary tool F is moved such that the axis C of the stirring pin F2 is overlapped with the set moving track L1. In the original section in the second primary joining process, friction stirring is performed in the same manner as that in the original section in the first primary joining process.

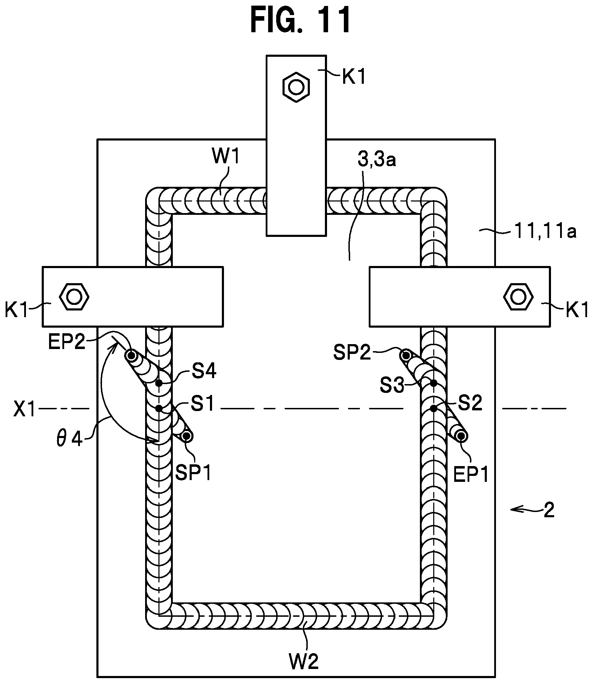

As shown in FIG. 11, after the stirring pin F2 reaches the other middle point S4, the stirring pin F2 continuously shifts to the leaving section. In the leaving section, the stirring pin F2 is gradually moved upward while being moved from the other middle point S4 toward the ending position EP2, at which position the stirring pin F2 is made to leave the sealing body 3. At this time, the rotary tool F is moved to the ending position EP1, while its rotational speed in the leaving section is gradually reduced from the rotational speed of the rotary tool F in the original section. The conditions in the leaving section in the second primary joining process are the same as those in the leaving section in the first main joining process.

The ending position EP2 is set on the peripheral wall end face 11a of the peripheral wall section 11 outside the set moving track L1. The ending position EP2 is set at a position where an angle θ4 defined by a line segment connecting the ending position EP2 and the other middle point S4 and the set moving track L1 in the peripheral wall end face 11a of the peripheral wall section 11 is an obtuse angle. A plasticized region W2 is formed along the moving track of the rotary tool F. The joined body 1 is formed by the above-described processes.

According to the method for manufacturing a joined body described above in this embodiment, in the leaving section where the rotary tool F is made to leave the jacket body (first metal member) 2 with higher hardness, the rotary tool F is removed while gradually decreasing the rotational speed from that in the original section. This can reduce frictional heat input to the jacket body 2, so that cracking on the jacket body 2 and generation of burrs can be suppressed. As a result, a good surface finish is achieved on the peripheral wall end face 11a of the jacket body 2. In other words, an excellent surface finish for the joined body 1 can be provided. Further, removing the rotary tool F while reducing its rotational speed makes it possible to suppress friction between the jacket body 2 (first metal member) with higher hardness and the rotary tool F, so that damage to the rotary tool F can be prevented. Further, according to this manufacturing method, it is possible to remove the rotary tool F from the jacket body (first metal member) 2 with higher hardness, and the removal hole is formed in the first metal member. As compared with the case where the rotary tool F is removed from the sealing body (second metal member) 3 with lower hardness, no removal hole is formed in the second metal member. This can eliminate the need to repair the removal hole in the second metal member, so that electronic components can be installed on the second metal member without requiring the pre-processing to repair the removal hole after friction stirring. As a result, it is possible to increase the degree of freedom in the design of the joined body produced by friction stir welding the first metal member and the second metal member as well as to improve the productivity.

The rotational speed of the rotary tool F may be set as desired. However, if the rotational speed of the rotary tool F for performing friction stir welding at the first butted portion J1 in the original section is assumed to be 100%, it is preferable that the rotational speed in the leaving section be set to 10% or higher and 50% or lower.

Further, assuming that the rotational speed in the leaving section is gradually reduced from that in the original section, it is preferable that the rotational speed of the rotary tool F in the original section for performing friction stir welding at the first butted portion J1 be set to 5,000 rpm or higher and 20,000 rpm or lower, and that the rotational speed in the leaving section be set to 1,000 rpm or higher and 8,000 rpm or lower.

The rotational speed of the rotary tool F may be set as desired. However, setting the rotational speed of the rotary tool F as described above makes it possible to more precisely achieve the above-described effects.

Further, the second aluminum alloy on the sealing body 3 side in the first butted portion J1 is mainly stirred to be plastically fluidized because of frictional heat generated by the friction between the sealing body 3 and the stirring pin F2. Thus, the step side face 12b and the side face 3c of the sealing body 3 in the first butted portion J1 are joined together. Furthermore, since the outer circumferential face of the stirring pin F2 is slightly brought in contact with the step side face 12b of the jacket body 2, the mixing amount of the first aluminum alloy into the sealing body 3 from the jacket body 2 can be reduced as much as possible. Thus, in the first butted portion J1, the second aluminum alloy on the sealing body 3 side is mainly frictionally stirred. For this reason, the decrease in the joining strength can be suppressed. That is, in the primary joining process, the unbalance between one side and the other side with respect to the axis C of the stirring pin F2, which is caused by material resistances to the stirring pin F2, can be reduced as much as possible. Thus, plastically fluidized materials are frictionally stirred in the well balanced state, so that the decrease in the joining strength can be suppressed. Further, metal shortage of the joined portion can be prevented by increasing the thickness of the sealing body 3.

In the insertion sections in the first and the second primary joining processes, the stirring pin F2 is gradually inserted to the predetermined depth while the rotary tool F is moved from the starting positions SP1, SP2 to positions to overlap with the set moving track L1. This can prevent excessive frictional heat that is generated when the rotary tool F stops on the set moving track L1.

Similarly, in the leaving sections in the first and the second primary joining processes, the stirring pin F2 is gradually pulled upward from the predetermined depth while the rotary tool F is moved from the set moving track L1 to the ending positions EP1, EP2, and is made to leave. This can prevent excessive frictional heat that is generated when the rotary tool F stops on the set moving track L1.

These measures can prevent excessive frictional heat on the set moving track L1, thus avoiding poor joining caused by excessive mixing of the first aluminum alloy from the jacket body 2 into the sealing body 3.

Further, by performing friction stir welding in the state that the stirring pin F2 is slightly in contact with both the step side face 12b and the step bottom face 12a, the first butted portion J1 and the second butted portion J2 can be reliably joined. Furthermore, since the stirring pin F2 is slightly brought in contact with the step side face 12b and the step bottom face 12a, the mixing amount of the first aluminum alloy that is mixed from the jacket body 2 into the sealing body 3 can be reduced as much as possible.

In the primary joining process, the starting positions SP1, SP2 may be appropriately set. By setting the positions such that angles θ1, θ3 made between each of the lines through the starting positions SP1, SP2 and the set moving track L1 is obtuse, the rotary tool F smoothly shifts to the original section without reducing the moving speed of the rotary tool F at the middle points S1, S3. This can prevent excessive frictional heat from being generated by stopping or reducing of the moving speed of the rotary tool F on the set moving track L1.

Further, in the primary joining process, the ending positions EP1, EP2 may be appropriately set. By setting the positions such that angles θ2, θ4 made between each of the lines through the ending positions EP1, EP2 and the set moving track L1 is obtuse, the rotary tool F smoothly shifts to the leaving section without reducing the moving speed of the rotary tool F at the other middle points S2, S4. This can prevent excessive frictional heat from being generated by stopping or reducing of the moving speed of the rotary tool F on the set moving track L1.

In the primary joining process according to this embodiment, a rotational direction and a moving (advancing) direction of the rotary tool F may be appropriately set. However, the rotational direction and the moving (advancing) direction of the rotary tool F are set such that within the plasticized region W1 formed along the moving track of the rotary tool F, the jacket body 2 side is a shear side, and the sealing body 3 side is a flow side. By setting the jacket body 2 side to be a shear side, stirring action around the first butted portion J1 due to the stirring pin F2 is enhanced, so that temperature rise in the first butted portion J1 can be expected. Therefore, in the first butted portion J1, the step side face 12b and the side face 3c of the sealing body 3 can be reliably joined together.

Note that, a shear side (Advancing side) means a side where the relative speed of the outer peripheral speed of the rotary tool, relative to a portion to be joined, is a speed obtained by adding the moving speed of the rotary tool and a tangential speed of the outer periphery of the rotary tool. On the other hand, a flow side (Retreating side) means a side where the relative speed of the rotary tool, relative to the portion to be joined, is low because the rotary tool is rotated in the direction opposite to the moving direction of the rotary tool.

The first aluminum alloy of the jacket body 2 is of a harder material than the second aluminum alloy of the sealing body 3. For this reason, the durability of the joined body 1 can be enhanced. It is preferable that the first aluminum alloy of the jacket body 2 is of an aluminum alloy casting material and the second aluminum alloy of the sealing body 3 be of an aluminum alloy expansible material. If the first aluminum alloy is of, for example, the aluminum alloy casting material based on Al-Si-Cu such as JISH5302 ADC12, castability, strength and machinability of the jacket body 2 can be enhanced. Further, if the second aluminum alloy is of, for example, a material based on JIS A1000 or A6000, workability and thermal conductivity of the jacket body 2 can be enhanced.

In the primary joining process, when the set moving track L1 is a closed track as in this embodiment, there is a problem that a work is complicated because the rotary tool F and the clamps K1 interfere with each other when the primary joining process is performed. However, according to this embodiment, friction stir welding is efficiently performed because a position to be clamped and a position to be frictionally stirred are separated, respectively, in the first primary joining process and in the second primary joining process.

In the primary joining process, since friction stir welding is performed to all around the first butted portion J1 in the first and second primary joining processes, airtightness and watertightness of the joined body can be enhanced. Further, the plasticized region W1 formed through the first primary joining process and the plasticized region W2 formed through the second primary joining process are overlapped at respective end portions on the set moving track L1, so that the airtightness and the watertightness can be more reliably enhanced.

Further, setting the inclination angle α of the stirring pin F2 and the inclination angle β of the step side face 12b to be the same (parallel) as each other, the stirring pin F2 can be brought in uniform contact with the whole of the step side face 12b in the height direction thereof. Thus, friction stir welding can be performed in a balanced manner.

Furthermore, in the primary joining process, friction stirring is performed in the state that a base portion of the stirring pin F2 of the rotary tool F is exposed, so that the load to be acted on the friction stir device can be reduced.

### [2. FIRST MODIFICATION]

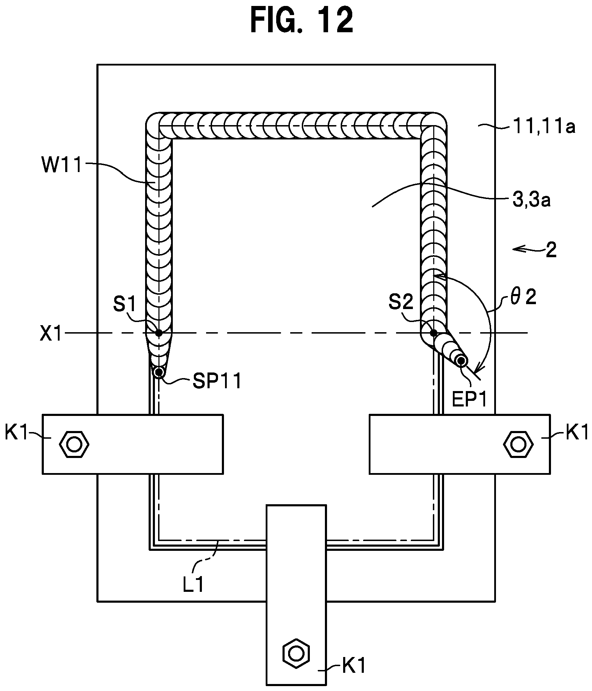

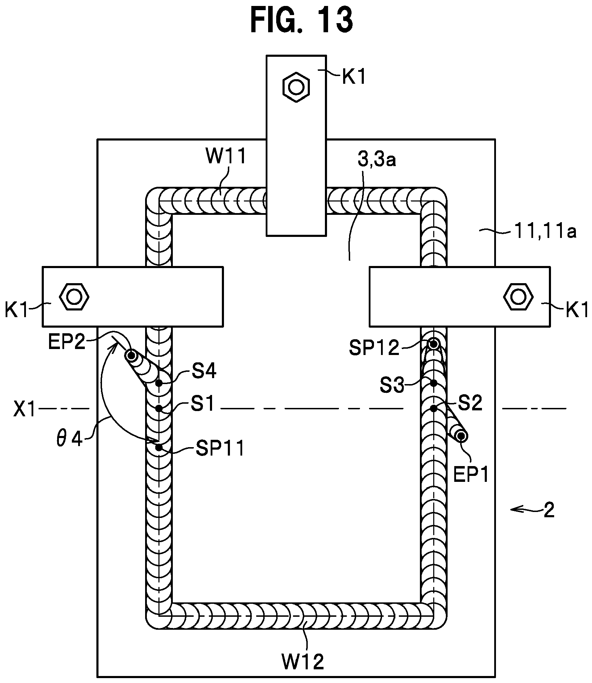

As shown in FIGS. 12 and 13, the first modification differs from the above embodiment in the positions of the starting positions SP1, SP2 in the primary joining process. The description of the first modification will focus on the parts that are different from those of the above embodiment.

According to the first modification, as shown in FIGS. 12 and 13, the starting positions SP11, SP12 are set on the set moving track L1 in the primary joining process. The other middle point S4 in the second primary joining process is set on the set moving track L1 on the side of the first region R1 (see FIG. 3) rather than the starting position SP11.

In the first primary joining process of the first modification, three sections - comprising an insertion section, an original section and a leaving section - are frictionally stirred continuously. The insertion section extends from a starting position SP11 to the middle point S1. The original section extends from the middle point S1 to the other middle point S2, both located on the set moving track L1. The leaving section extends from the other middle point S2 to the ending position EP1. A plasticized region W11 is formed along the moving track of the rotary tool F. Further, in the second primary joining process of the first modification, three sections - comprising an insertion section, an original section and a leaving section - are frictionally stirred continuously. The insertion section extends from a starting position SP12 to the middle point S3. The original section extends from the middle point S3 to the other middle point S4, both located on the set moving track L1. The leaving section extends from the other middle point S4 to the ending position EP2. In the original section in the second primary joining process, the rotary tool F is moved from the middle point S1 to the other middle point S4 such that the stirring pin F2 passes through the starting position SP11. A plasticized region W12 is formed along the moving track of the rotary tool F. Accordingly, in the original section in the second primary joining process, an insertion hole formed at the starting position SP11 can be filled by the plasticized region W12.

According to the first modification, in the insertion section in the first primary joining process, the rotational speed of the rotary tool F for friction stir welding may be set as desired. For example, in the insertion section, while moving the rotary tool F to the middle points S1, S3, the rotational speed of the rotary tool F may be gradually lowered from a rotational speed higher than that of the rotary tool F in the original section. In this case, it is preferable to adjust the rotational speed of the rotary tool F toward the rotational speed used in the original section such that it matches the rotational speed in the original section when the stirring pin F2 reaches the middle points S2, S4.

According to this modification, it is possible to fill the insertion hole formed at the starting position SP11 on the set moving track L1. Since no insertion holes remain in the jacket body (first metal member) 2 and the sealing body (second metal member) 3, there is no need to repair the insertion holes. This allows for the installation of electronic components on the second metal member without requiring pre-processing to repair the insertion holes after friction stirring. Further, the plasticized region formed on the second metal member can be made smaller as compared with that formed in the above embodiment. As a result, it is possible to further increase the degree of freedom in the design of the joined body produced by friction stir welding the first metal member and the second metal member as well as to further improve the productivity.

### [3. SECOND MODIFICATION]

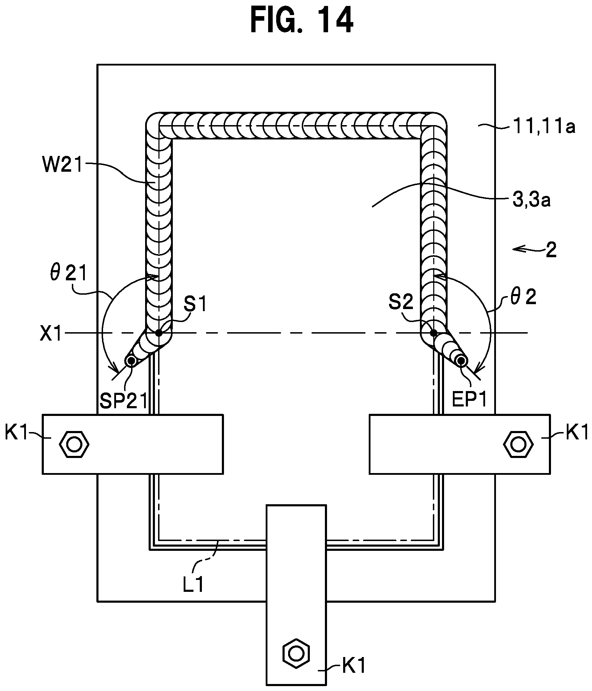

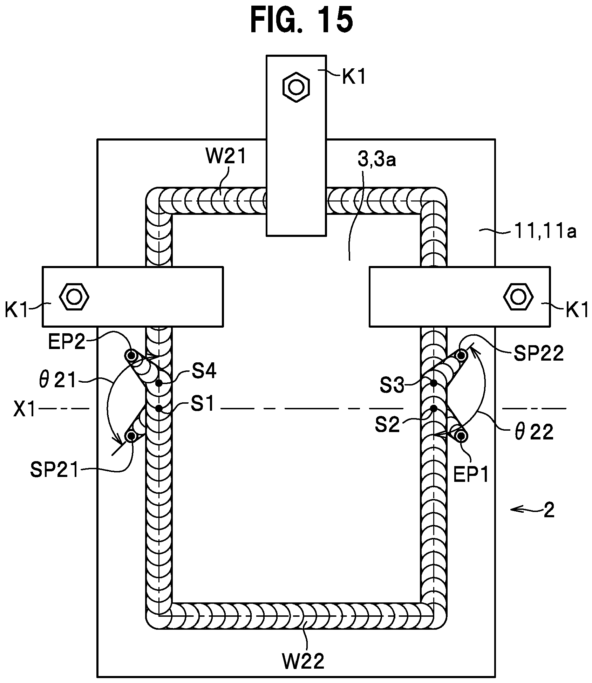

As shown in FIGS. 14 and 15, the second modification differs from the above embodiment in the positions of the starting positions SP21, SP22 in the primary joining process. The description of the second modification will focus on the parts that are different from those of the above embodiment.

According to the second modification, as shown in FIGS. 14 and 15, the starting positions SP21, SP22 are set on the peripheral wall end face 11a of the peripheral wall section 11 in the primary joining process. The starting positions SP21, SP22 are set on the peripheral wall end face 11a of the peripheral wall section 11 at positions outside the set moving track L1. In the second modification, the starting positions SP21, SP22 are set at positions where an angle θ21. θ22 defined by a line segment connecting the starting position SP21, SP22 and the middle point S1, S2 and the set moving track L1 is an obtuse angle.

In the first primary joining process of the second modification, three sections - comprising an insertion section, an original section and a leaving section - are frictionally stirred continuously. The insertion section extends from a starting position SP21 to the middle point S1. The original section extends from the middle point S1 to the other middle point S2, both located on the set moving track L1. The leaving section extends from the other middle point S2 to the ending position EP1. A plasticized region W21 is formed along the moving track of the rotary tool F. Further, in the second primary joining process of the second modification, three sections - comprising an insertion section, an original section and a leaving section - are frictionally stirred continuously. The insertion section extends from a starting position SP22 to the middle point S3. The original section extends from the middle point S3 to the other middle point S4, both located on the set moving track L1. The leaving section extends from the other middle point S4 to the ending position EP2. A plasticized region W22 is formed along the moving track of the rotary tool F.

According to the second modification, in the insertion section in the primary joining process, the stirring pin F2 is gradually inserted such that it reaches a "predetermined depth" set in advance at least by the time it reaches from the starting positions SP21, SP22 to the middle points S1, S2. That is, the rotary tool F is gradually lowered while it is being moved to the set moving track L1 without remaining in one position. At this time, the rotary tool F may be moved to the middle point S1, while its rotational speed in the insertion section is gradually increased from a rotational speed lower than the rotational speed of the rotary tool F in the original section. For example, if the rotational speed of the rotary tool F for performing friction stir welding at the first butted portion J1 in the original section is assumed to be 100%, the rotational speed in the insertion section can be set to 10% or higher and 50% or lower. The rotational speed in the insertion section relative to the rotational speed of the rotary tool F for performing friction stir welding at the first butted portion J1 is preferably 15% or higher, more preferably 20% or higher, and even more preferably 25% or higher, and also preferably 45% or lower, more preferably 40% or lower, and even more preferably 35% or lower. In the insertion section, the rotational speed of the rotary tool F can be set as desired. For example, it can be set to 1,000 rpm or higher, and 8,000 rpm or lower. The rotational speed of the rotary tool F in the insertion section is preferably 2,000 rpm or higher, more preferably 3,000 rpm or higher, and further more preferably 4,000 rpm or higher, and also preferably 7,000 rpm or lower, more preferably 6,000 rpm or lower, and further more preferably 5,000 rpm or lower.

According to this modification, the insertion hole is formed in the jacket body 2 (first metal member) and no insertion hole is formed in the sealing body (second metal member) 3. This can eliminate the need to repair the insertion hole in the second metal member, so that electronic components can be installed on the second metal member without requiring the pre-processing to repair the insertion hole after friction stirring. Further, the plasticized region formed on the sealing body 3 can be made smaller as compared with that formed in the above embodiment. As a result, it is possible to further increase the degree of freedom in the design of the joined body produced by friction stir welding the first metal member and the second metal member as well as to further improve the productivity.

### [3. THIRD MODIFICATION]

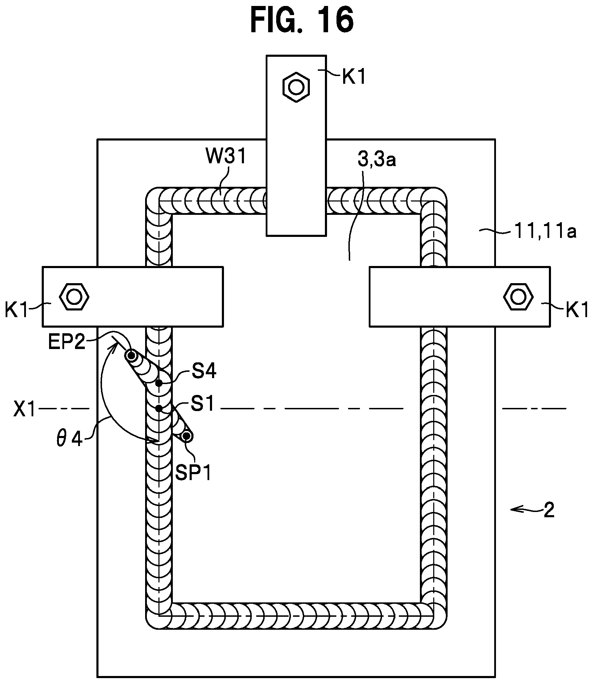

In the above embodiment, friction stirring is performed while clamping the jacket body and the sealing body 3 twice. However, friction stirring may also be performed while clamping the jacket body 2 and the sealing body 3 once or more than three times. As shown in FIG. 16, the third modification differs from the above embodiment in that clamping in the primary joining process is performed at one time without dividing it into two steps. The description of the third modification will focus on the parts that are different from those of the above embodiment.

In the primary joining process of the third modification, as shown in FIG. 16, three sections - comprising an insertion section, an original section and a leaving section - are frictionally stirred continuously. The insertion section extends from the starting position SP1 to the middle point S1. The original section extends around the periphery of the sealing body 3 from the middle point S1 to the other middle point S4, both located on the set moving track L1. The leaving section extends from the other middle point S4 to the ending position EP2. A plasticized region W31 is formed along the moving track of the rotary tool F. In this instance, friction stirring is performed while clamping the jacket body 2 and the sealing body 3 at multiple positions. Clamping is temporarily released when the rotary tool F approaches, and then re-clamped after the rotary tool F passes through the clamped position.

According to this modification, since friction stir welding can be performed in a single step, it is possible to improve the productivity.

### [5. FOURTH MODIFICATION]

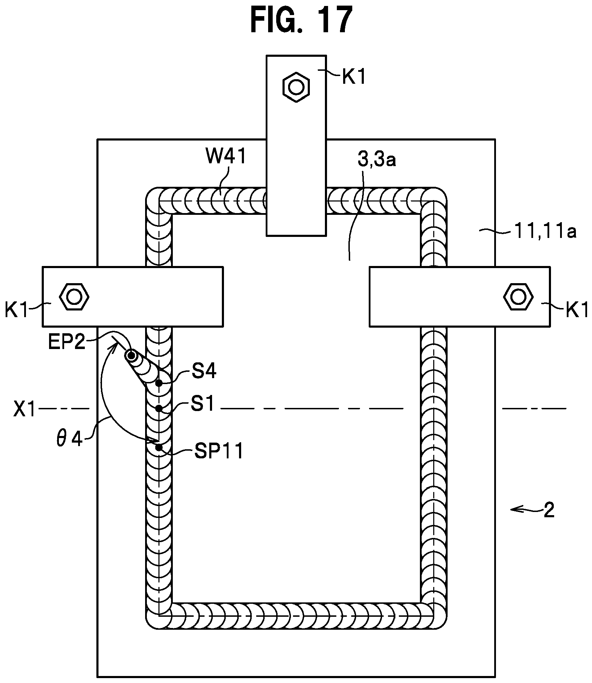

As shown in FIG. 17, the fourth modification differs from the above embodiment in the position of the starting position SP11 in the primary joining process and in that the primary joining process is performed in a single step. The description of the fourth modification will focus on the parts that are different from those of the above embodiment.

According to the fourth modification, as shown in FIG. 17, the starting position SP11 is set on the set moving track L1 in the primary joining process. The other middle point S4 in the primary joining process is set on the set moving track L1 on the side of the first region R1 (see FIG. 3) rather than the starting position SP11.

In the primary joining process of the fourth modification, as shown in FIG. 17, three sections - comprising an insertion section, an original section and a leaving section - are frictionally stirred continuously. The insertion section extends from the starting position SP11 to the middle point S1. The original section extends around the periphery of the sealing body 3 from the middle point S1 to the other middle point S4, both located on the set moving track L1. The leaving section extends from the other middle point S4 to the ending position EP2. In the original section in the fourth primary joining process, the rotary tool F is moved from the middle point S1 to the other middle point S4 such that the stirring pin F2 passes through the starting position SP11. A plasticized region W41 is formed along the moving track of the rotary tool F. Accordingly, in the original section according to the fourth modification, an insertion hole formed at the starting position SP11 can be filled by the plasticized region W41. In this instance, friction stirring is performed while clamping the jacket body 2 and the sealing body 3 at multiple positions. Clamping is temporarily released when the rotary tool F approaches, and then re-clamped after the rotary tool F passes through the clamped position.

According to the fourth modification, in the insertion section in the primary joining process, the rotational speed of the rotary tool F for friction stir welding may be set as desired. For example, in the insertion section, while moving the rotary tool F to the middle point S1, the rotational speed of the rotary tool F may be gradually lowered from a rotational speed higher than that of the rotary tool F in the original section. In this case, it is preferable to adjust the rotational speed of the rotary tool F toward the rotational speed used in the original section such that it matches the rotational speed in the original section when the stirring pin F2 reaches the middle point S1.

According to this modification, since friction stir welding can be performed in a single step, it is possible to improve the productivity. Further, according to this modification, it is possible to fill the insertion hole formed at the starting position SP11 on the set moving track L1. Since no insertion hole remains in the sealing body (second metal member) 3, there is no need to repair the insertion hole in the second metal member. This allows for the installation of electronic components on the second metal member without requiring pre-processing to repair the insertion hole after friction stirring. Further, the plasticized region formed on the sealing body 3 can be made smaller as compared with that formed in the above embodiment. As a result, it is possible to further increase the degree of freedom in the design of the joined body produced by friction stir welding the first metal member and the second metal member as well as to further improve the productivity.

Further, according to this modification, the rotary tool F is moved such that before the rotary tool F is made to leave the jacket body (first metal member) 2 at the ending position EP2, the stirring pin F2 passes through the starting position SP11. Accordingly, in this modification, the one insertion hole formed at the starting position SP1 can be filled, while performing friction stir welding along the set moving track L1. Therefore, since no insertion holes remain on the set moving track L1, it is possible to further increase design freedom and to further improve the productivity.

### [6. OTHER MODIFICATIONS]

Although one preferred embodiment and various modifications of the present invention have been described above, it is to be understood that appropriate design changes may be made without departing from the gist of the present invention.

For example, at the starting positions SP1, SP2, the rotary tool F is gradually inserted while being moved. However, the rotary tool F may be moved after being inserted into a predetermined position at the starting positions SP1, SP2. Further, at the ending positions EP1, EP2, the rotary tool F is gradually pulled upward (made to leave) while being moved. However, the rotary tool F may be moved upward and removed vertically at the ending positions EP1, EP2 after it is moved to the ending positions EP1, EP2 at a predetermined depth (constant depth).

Further, before performing the primary joining process, a provisional joining process may be carried out, in which the jacket body 2 and the sealing body 3 are provisionally joined. This makes it possible to prevent misalignment between the jacket body 2 and the sealing body 3 in the primary joining process. In the provisional joining process, friction stirring may be performed using a rotary tool dedicated for provisional joining, or welding may be used. Further, in the insertion section and the leaving section, the moving track of the rotary tool F may be set to draw a curved line (for example, an arc) when viewed in a plan view. This allows for a smooth transition from the insertion section to the original section or from the original section to the leaving section.

An explanation has been given in the embodiment by way of example where friction stir welding is performed with the use of the rotary tool F by inserting only the stirring pin F2 into the jacket body 2 and the sealing body 3. However, the use of the rotary tool and the manner of friction stir welding are not limited to this specific embodiment. For example, friction stir welding may be performed using a rotary tool equipped with a shoulder and a stirring pin hanging down from the shoulder. To be more specific, friction stir welding may be performed by inserting the stirring pin into the jacket body 2 and the sealing body 3 while the shoulder is in contact with the peripheral wall portion 11 of the jacket body 2 and the front face 3a of the sealing body 3.

### Reference Signs List

- 1: Joined body
- 2: Jacket body (First metal member)
- 3: Sealing body (Second metal member)
- F: Rotary tool
- F2: Stirring pin
- F3: Flat face
- J1: First butted portion
- J2: Second butted portion
- EP1: Ending position
- EP2: Ending position
- W: Plasticized region

## Claims

1. A method for manufacturing a joined body, in which a first metal member and a second metal member are joined together by friction stirring,
wherein the first metal member is made of a first aluminum alloy, and the second metal member is made of a second aluminum alloy, the first aluminum alloy having a higher hardness than the second aluminum alloy, and
wherein a rotary tool used in the friction stirring has a stirring pin,
the method comprising the steps of:
a butting process to form a butted portion by butting a side face of the first metal member and a side face of the second metal member, and
a primary joining process to perform friction stirring to the butted portion by moving the stirring pin of the rotary tool at a predetermined depth along a set moving track that is set on an inner side relative to the side face of the second metal member in a state that the stirring pin of the rotary tool being rotated is inserted into the second metal member and that an outer circumferential face of the stirring pin is slightly in contact with the first metal member,
wherein in the primary joining process, an ending position is set on the first metal member at an outer side relative to the set moving track, and a leaving section is provided, in which after friction stir welding is performed to the butted portion, the rotary tool is moved toward the ending position and is made to leave the first metal member at the ending position,
wherein in the primary joining process, the friction stirring is performed to the butted portion while the stirring pin is rotated at a predetermined rotational speed, and
wherein the rotary tool is made to leave the first metal member in the leaving section when the rotary tool is moved to the ending position while gradually decreasing a rotational speed of the stirring pin from the predetermined rotational speed.

2. The method for manufacturing a joined body according to claim 1,
wherein in the primary joining process, if the rotational speed for performing friction stir welding at the butted portion is assumed to be 100%, a final rotational speed in the leaving section is set to 10% or higher and 50% or lower.

3. The method for manufacturing a joined body according to claim 1,
wherein in the primary joining process, the rotational speed for performing friction stir welding at the butted portion is 5,000 rpm or higher and 20,000 rpm and lower, and
wherein a final rotational speed in the leaving section is 1,000 rpm or higher and 8,000 rpm or lower.

4. The method for manufacturing a joined body according to claim 1, further comprising a preparation process to form the first metal member by die-casting.

5. The method for manufacturing a joined body according to claim 1,
wherein in the primary joining process, a starting position is set on the set moving track, and an insertion section is provided, in which before friction stir welding is performed to the butted portion, the stirring pin is inserted into the starting position and the rotary tool is lowered while being moved from the starting position,
wherein in the primary joining process, friction stir welding is performed by moving the rotary tool such that before the rotary tool is made to leave the first metal member at the ending position, the stirring pin passes through the starting position.

6. The method for manufacturing a joined body according to claim 1,
wherein in the primary joining process, a starting position is set on the set moving track, and an insertion section is provided, in which before friction stir welding is performed to the butted portion, the stirring pin is inserted into the starting position and the rotary tool is lowered while being moved from the starting position,
wherein in the insertion section, the rotary tool is moved toward a middle point that is set on the set moving track and lowered, while gradually decreasing the rotational speed from a rotational speed higher than the predetermined rotational speed.

7. The method for manufacturing a joined body according to claim 1,
wherein in the primary joining process, a starting position is set on the second metal member at an inner side relative to the set moving track, and an insertion section is provided, in which before friction stir welding is performed to the butted portion, the stirring pin is inserted into the starting position and the rotary tool is lowered while being moved from the starting position, and
wherein in the insertion section, the rotary tool is moved and lowered, while gradually decreasing the rotational speed from a rotational speed higher than the predetermined rotational speed.

8. The method for manufacturing a joined body according to claim 1,
wherein in the primary joining process, a starting position is set on the first metal member at an outer side relative to the set moving track, and an insertion section is provided, in which before friction stir welding is performed to the butted portion, the stirring pin is inserted into the starting position and the rotary tool is lowered while being moved from the starting position, and
wherein in the insertion section, the rotary tool is moved and lowered, while gradually increasing the rotational speed from a rotational speed lower than the predetermined rotational speed.
